# FASCICULE DE BREVET EUROPEEN

(11) **EP 1 181 662 B1**
(45) Date de publication et mention de la délivrance du brevet: **12.03.2003**
(21) Numéro de dépôt: 00920805.9
(22) Date de dépôt: 14.04.2000
(51) Int. Cl.: G06K 7/00

(54) **PROCEDE ET DISPOSITIF DE PRISE D'UN CONTACT ELECTRIQUE SUR UNE CARTE A PUCE**
VERFAHREN UND GERÄT ZUR ELEKTRISCHEN KONTAKTIERUNG EINER CHIPKARTE
METHOD AND DEVICE FOR ELECTRICALLY CONTACTING A CHIP CARD

(30) Priorité: 16.04.1999 FR 9904993
(43) Date de publication de la demande: 27.02.2002
(73) Titulaire: ASCOM MONETEL S.A., 07500 Guilherand-Granges (FR)
(72) Inventeur: LE GAL, Patrick, F-07130 Saint Péray (FR)
(74) Mandataire: de Beaumont, Michel
(86) Numéro de dépôt international: FR0000979
(87) Numéro de publication internationale: WO00063828

(56) Documents cités:
- EP-A- 0 853 289
- DE-A- 3 412 453
- DE-A- 3 916 783
- DE-A- 19 503 566

## Description

La présente invention concerne les lecteurs de carte à puce à insertion manuelle.

Un lecteur de carte à puce comporte un ensemble de plots de contact reliés directement ou indirectement à des circuits du lecteur et destinés à établir une liaison électrique avec des zones conductrices situées à la surface de la carte et reliées à des bornes de la puce contenue dans la carte.

Dans un lecteur de carte à puce à insertion manuelle, c'est la carte qui, lors de son insertion dans un chemin de guidage du lecteur, interagit avec des moyens mécaniques qui mettent en contact les plots du lecteur et les zones conductrices de la carte. Les plots de contact sont typiquement élastiques ou montés sur des supports élastiques tels que des lames souples.

Dans un premier type de lecteur à insertion manuelle, les plots de contact sont montés sur un support fixe et sont situés sur le chemin suivi par la carte. Lors de l'insertion de la carte dans le lecteur, les plots sont d'abord écartés par le bord de la carte, puis ils frottent sur la carte avant de venir porter sur les zones conductrices de la carte. Chaque insertion de la carte provoque un frottement important, notamment du bord des cartes insérées, sur les plots de contact du lecteur. De tels frottements provoquent une usure des plots qui limite la durée de vie du lecteur. D'autre part, une telle solution est particulièrement sensible aux actes de vandalisme perpétrés contre le lecteur, par exemple au moyen d'une lime ou de pièces de monnaie introduites dans le chemin de guidage pour détériorer les plots de contact.

Dans un deuxième type de lecteur, les plots de contact sont situés sur une pièce mobile du lecteur, prévue pour être abaissée sur une carte que l'on introduit dans le chemin de guidage par une interaction mécanique avec la carte. Dans ce cas, les plots viennent porter directement sur les zones conductrices de la carte près de leur position finale, sans entrer en contact avec le bord et la partie plastique antérieure de la carte, ce qui limite leur usure. D'autre part, les plots de contact sont mieux protégés contre des actes de vandalisme. Ce type de lecteur est couramment appelé dans la technique "lecteur à atterrissage".

En outre dans les lecteurs classiques, des premier et deuxième types, il est généralement prévu un détecteur de fin de course de la carte destiné à "activer" les plots de contact, c'est-à-dire à les connecter aux dispositifs d'alimentation, de lecture et/ou d'écriture du lecteur, seulement quand la carte a été complètement enfoncée.

Lorsqu'un utilisateur commence à retirer la carte du lecteur, les zones conductrices de la carte, sur lesquelles portent les plots de contact activés, se mettent à glisser par rapport aux plots. Lorsque la carte a été retirée sur une certaine longueur, le détecteur de fin de course commute, ce qui a pour effet de désactiver les contacts. Les zones conductrices sont situées les unes par rapport aux autres de telle sorte que, au moins pour certaines zones, lors du glissement de la carte, certains plots vont passer d'une zone à une autre. Le fait que ce passage se produise avant que les plots n'aient été "désactivés" par le détecteur de fin de course peut entraîner des erreurs de lecture ou d'écriture, des défauts d'alimentation ou encore des risques de court-circuit. Pour éviter cela, les lecteurs classiques sont prévus pour que le détecteur de fin de course commute alors que chaque zone conductrice se trouve encore sous le plot de contact qui lui est normalement associé. Cependant, les zones conductrices ont souvent de très petites dimensions, par exemple de l'ordre du millimètre, ce qui impose une grande précision dans la réalisation des lecteurs et dans le positionnement relatif de leurs divers éléments (contacts, détecteur de fin de course), précision qui doit être d'autant plus grande que la tolérance diminue tandis que les plots s'usent et que leur surface de contact avec les zones conductrices augmente.

Le document EP-A-0853289 décrit un lecteur de carte à puce à insertion manuelle comprenant un bâti avec un chemin de guidage de la carte, une pièce mobile portant un ensemble de plots de contact, un moyen de couplage mécanique pour interagir avec la carte tandis que celle-ci effectue une première course et amener les plots de contact à porter sur des zones choisies de la carte. Ce document ne décrit pas un mouvement à deux étapes de la pièce mobile.

Le document DE-A-3916783 décrit un lecteur de carte à puce à insertion manuelle comprenant un bâti avec un chemin de guidage de la carte, une pièce mobile portant un ensemble de plots de contact, un premier moyen de couplage mécanique pour interagir avec la carte tandis que celle-ci effectue une première course et amener les plots de contact à porter sur des zones choisies de la carte. Ce document ne prévoit pas de faire effectuer à la pièce mobile un mouvement de translation relatif par rapport à la carte.

Un objet de la présente invention est de prévoir un lecteur de carte à puce à insertion manuelle du type à atterrissage dans lequel le retrait de la carte ne risque pas de provoquer des erreurs ou des défauts.

Pour atteindre cet objet ainsi que d'autres, la présente invention prévoit un lecteur à atterrissage dans lequel, lors du retrait de la carte, les plots de contact et la carte sont d'abord déplacés de manière solidaire. Au cours de cette phase, le détecteur de fin de course commute et désactive les plots de contact. Le glissement des zones conductrices de la carte par rapport aux plots de contact ne commence qu'après que ces derniers aient été désactivés.

Plus particulièrement, la présente invention prévoit un lecteur de carte à puce à insertion manuelle comprenant un bâti dans lequel est ménagé un chemin de guidage de la carte ou d'un support de celle-ci, une pièce mobile portant un ensemble de plots de contact, un premier moyen de couplage mécanique couplé à la pièce mobile et disposé pour interagir avec la carte tandis que celle-ci effectue une première course pour faire effectuer à la pièce mobile un mouvement horizontal relatif par rapport à la carte et amener les plots de contact à porter sur des zones choisies de la carte lors de l'insertion de celle-ci, et un deuxième moyen de couplage mécanique couplé à la pièce mobile et disposé pour interagir avec la carte pour, lors d'une deuxième course de la carte, faire effectuer à la pièce mobile un mouvement horizontal solidaire avec la carte.

Selon un mode de réalisation de la présente invention, le lecteur comprend en outre un commutateur dont la commutation active les plots de contact, fixé au bâti de manière à être commuté par une interaction avec la carte à la fin de la deuxième course, le deuxième moyen de couplage étant tel que, lors du retrait de la carte, le commutateur est commuté et désactive les plots de contact pendant la deuxième course.

Selon un mode de réalisation de la présente invention, le premier moyen de couplage mécanique provoque un glissement avec frottement des plots de contact sur la carte avant qu'ils ne se positionnent sur les zones choisies de la carte.

Selon un mode de réalisation de la présente invention, le lecteur comprend un moyen de rappel pour, lorsque l'utilisateur retire la carte, ramener la pièce mobile dans une position de repos située hors du chemin de guidage.

Selon un mode de réalisation de la présente invention, la pièce mobile est couplée au bâti par deux paires de tiges, une première paire de tiges étant reliée en rotation autour d'un premier axe au bâti et autour d'un deuxième axe à la pièce mobile, la deuxième paire de tiges étant reliée en rotation autour d'un troisième axe au bâti et autour d'un quatrième axe à la pièce mobile.

Selon un mode de réalisation de la présente invention, le premier moyen de couplage mécanique est un levier formé par prolongement d'une tige d'une des paires de tiges de manière à interagir avec le bord de la carte pour rapprocher les plots de contact de la pièce mobile des zones choisies de la carte.

Selon un mode de réalisation de la présente invention, le deuxième moyen de couplage mécanique est une butée fixée à la pièce mobile à une distance prédéterminée des plots de contact, combinée à une structure qui permet aux plots de contact de porter sur les zones choisies de la carte avec une pression suffisante pour entraîner un déplacement solidaire de la carte et de la pièce mobile.

L'invention prévoit aussi un procédé d'insertion d'une carte à puce dans un lecteur de carte à puce comportant les étapes suivantes :
a) insérer la carte dans le lecteur jusqu'à ce que celle-ci ou un support de celle-ci entre en contact avec un premier moyen de couplage mécanique couplé à une pièce mobile portant un ensemble de plots de contact ;
b) poursuivre l'insertion de la carte jusqu'à ce que celle-ci ou le support de celle-ci entre en contact avec un deuxième moyen de couplage mécanique, la carte ou le support de celle-ci étant en contact avec le premier moyen de couplage, de sorte que la pièce mobile effectue un mouvement horizontal relatif par rapport à la carte ; et
c) poursuivre davantage l'insertion de la carte, la carte ou le support de celle-ci étant en contact avec le deuxième moyen de couplage, de sorte que le mouvement horizontal de la pièce mobile est solidaire du mouvement de la carte au cours de cette étape.

Selon un mode de réalisation de la présente invention, au cours de l'étape b), les plots de contact de la pièce mobile viennent se poser sur la carte et y exécutent un mouvement de glissement avec frottement.Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 illustre une première étape de l'insertion d'une carte à puce dans un lecteur selon la présente invention ;
la figure 2 illustre une deuxième étape de l'insertion d'une carte à puce dans un lecteur selon la présente invention ;
la figure 3 illustre une troisième étape de l'insertion d'une carte à puce dans un lecteur selon la présente invention ; et
la figure 4 illustre une étape finale de l'insertion d'une carte à puce dans un lecteur selon la présente invention.

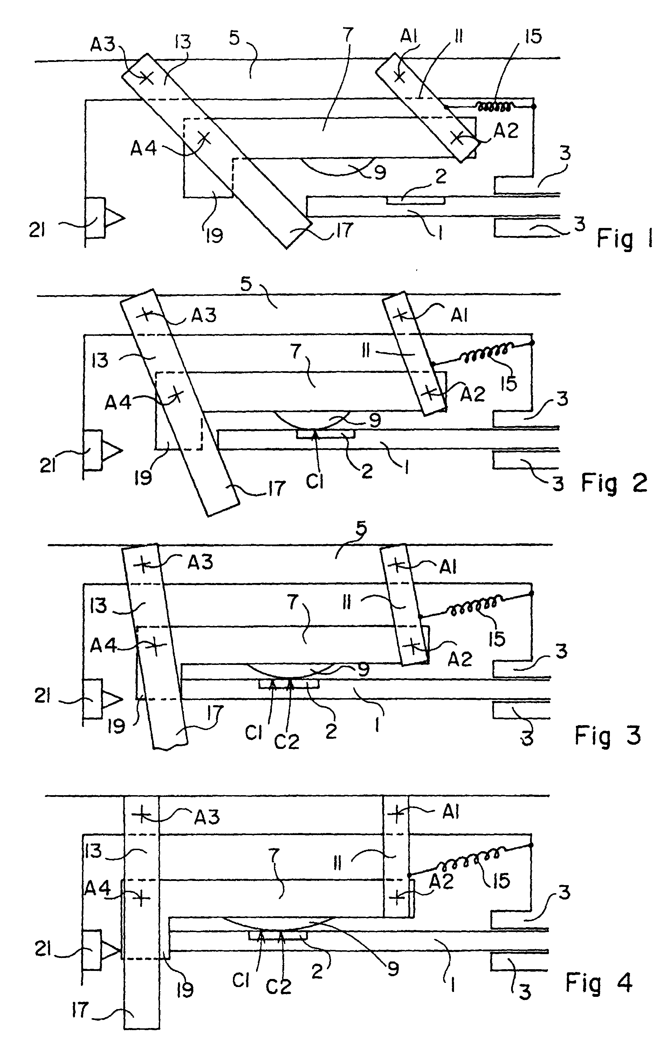

La figure 1 représente une vue en coupe d'une carte à puce 1 comportant des zones conductrices 2, insérée dans un chemin de guidage 3 du bâti 5 d'un lecteur de carte à puce selon la présente invention. Une pièce mobile 7 portant des plots de contact 9 est couplée au bâti 5 par deux paires de tiges 11 et 13. La paire de tiges 11 (dont une seule est visible) est reliée en rotation autour d'un premier axe, passant par un point A1, au bâti 5 et autour d'un deuxième axe, passant par un point A2, à la pièce mobile 7. De même, la paire de tiges 13 (dont une seule est visible) est reliée en rotation autour d'un troisième axe, passant par un point A3, au bâti 5 et autour d'un quatrième axe, passant par un point A4, à la pièce mobile 7. Les points A1 à A4 forment un parallélogramme articulé A1 A2 A4 A3. Un ressort de rappel 15 relié à la tige 11 rappelle la pièce mobile 7 dans une position de repos. Une des tiges 13 est allongée pour former un levier 17 qui coupe le chemin suivi par la carte 1 lors de son insertion dans le chemin de guidage 3. Une butée 19 est solidaire de la pièce mobile 7 de manière à couper le chemin suivi par la carte. Un détecteur de fin de course 21 est fixé au bâti de manière à être commuté à la fin de l'insertion de la carte.

Le levier 17 et la butée 19 sont disposés pour permettre notamment le dégagement latéral d'objets parasites introduits par vandalisme, par exemple des demi-cartes (des cartes coupées en deux. Ainsi, le levier 17 sera disposé de préférence pour être poussé par une zone frontale de la carte voisine d'un coin de celle-ci et la butée 19 sera par exemple constituée de deux petites butées latérales disposées sur les bords du chemin de guidage.

La figure 1 illustre la fin d'une première étape de l'insertion de la carte 1 dans le chemin de guidage 3, à un instant où le bord de la carte 1 arrive au contact du levier 17.

Les figures 2 à 4 illustrent des étapes ultérieures de l'insertion de la carte à puce dans le lecteur représenté en figure 1. De mêmes références désignent de mêmes éléments aux figures 1 à 4.

Lors d'une deuxième étape, on introduit plus avant la carte dans le chemin de guidage et la pression du bord de la carte sur le levier 17 provoque une descente de la pièce mobile 7 par déformation du parallélogramme A1 A2 A4 A3. Les plots de contact 9 sont ainsi rapprochés des zones conductrices 2 de la carte.

La figure 2 illustre la fin de la deuxième étape, à un instant où les plots de contact 9 entrent en contact, en des points de contact initiaux C1, avec les zones conductrices 2 de la carte 1.

Lors d'une troisième étape, on continue d'introduire la carte 1 dans le chemin de guidage 3 et le déplacement relatif de la pièce mobile 7 par rapport à la carte 1 fait que les plots 9 subissent un glissement avec frottement sur les zones conductrices 2, et que la pression des contacts 9 sur les zones conductrices 2 augmente.

La figure 3 illustre la fin de la troisième étape, à un instant où le bord de la carte 1 entre en contact avec la butée 19 de la pièce mobile 7. Les plots 9 ont été amenés, par glissement sur les zones conductrices 2, depuis les points de contact initiaux C1 jusqu'à des points de contact finaux C2.

Lors d'une quatrième étape, on finit d'introduire la carte dans le chemin de guidage 3 et le bord de la carte 1 pousse sur la butée 19 et entraîne la pièce mobile 7. Pendant cette quatrième étape la pièce mobile se déplace avec la carte. La position C2 des plots de contact 9 sur les zones conductrices 2 ne varie plus. On notera que, le parallélogramme A1 A2 A4 A3 continuant de se déformer, la pièce mobile 7 continue de se rapprocher de la surface de la carte, ce qui accroît encore la pression des plots 9 sur les zones conductrices 2.

La figure 4 illustre la fin de la quatrième étape, à un instant où la pièce mobile 7, sous la pression de la carte 1, vient commuter le détecteur de fin de course 21. Cette commutation active les plots de contact 9 et permet aux circuits du lecteur d'accéder aux données contenues dans la puce de la carte.

La course de la carte 1 dans le chemin de guidage 3 aux étapes 1 à 3 correspond à une course initiale correspondant à l'étape 1 puis à une première course correspondant aux étapes 2 et 3, dans laquelle le levier 17 déforme le parallélogramme A1 A2 A4 A3 pour amener les plots de contact de la pièce mobile à porter sur des zones choisies C2 de la carte. Dans la première course, la pièce mobile effectue un mouvement horizontal relatif par rapport à la carte, sa vitesse, en valeur absolue, étant différente de celle de la carte. La course de la carte 1 dans le chemin de guidage 3 à la quatrième étape correspond à une deuxième course dans laquelle la butée 19 permet de déplacer la carte et la pièce mobile de manière solidaire jusqu'à ce qu'un détecteur de fin de course soit commuté.

Le retrait de la carte se fait selon une suite d'étapes sensiblement inverses de celles décrites précédemment.

Quand l'utilisateur amorce le retrait de la carte, les plots 9 exercent une pression importante sur les zones conductrices 2. Selon la présente invention, on prévoit que cette pression est suffisante pour que la carte entraîne la pièce mobile 7 dans un mouvement solidaire. Ainsi, lors de cette première étape de retrait, le détecteur de fin de course est commuté de manière à désactiver les plots 9 tandis que ces derniers restent en contact avec les zones conductrices 2 aux points C2.

Dans une deuxième étape, la pression exercée par les plots de contact 9 sur les zones conductrices 2 de la carte n'est plus suffisante pour assurer un mouvement solidaire de la carte 1 et de la pièce mobile 7. La carte 1 commence alors à glisser par rapport à la pièce mobile 7, et l'extrémité de la carte quitte la butée 19. A partir de cet instant, la force de rappel exercée par le ressort 15 commence à ramener la pièce mobile 7 à sa position de repos.

On notera que la longueur du mouvement solidaire lors du retrait de la carte ne dépend que de la pression exercée par les plots sur la carte, alors que la longueur du mouvement solidaire lors de l'insertion de la carte dépend de la position de la butée 19 par rapport aux plots. Ces deux longueurs ne seront pas nécessairement identiques.

On notera que la force du ressort de rappel 15 devra être faible pour ne pas causer une éjection d'une carte complètement insérée.

Enfin, on notera que la distance entre la butée 19 et les plots de contact est particulièrement importante, notamment car elle permet de déterminer la longueur du glissement avec frottement entre les positions C1 et C2. Cette longueur doit être suffisante pour permettre le nettoyage des plots de contact et des zones conductrices mais elle doit également être assez courte pour que les plots de contact ne quittent pas les zones conductrices qui leur sont normalement associées. Il est important de garantir cette distance avec précision. une solution consiste à utiliser une butée 19 fabriquée d'une seule pièce avec le support des plots de contact 9.

On notera que les formes des paires de tiges 11 et 13, du levier 17 du plot de contact 9, données à titre d'exemple, pourront être adaptées en fonction de contraintes propres à l'utilisation de pièces préexistantes.

Bien entendu, la présente invention est susceptible de diverses variantes et modifications qui apparaîtront à l'homme du métier. En particulier, on notera que la carte à puce, au lieu d'être insérée directement dans le lecteur, peut être placée sur un support de carte interagissant avec les premier et deuxième moyens de couplage, sans sortir du domaine de la présente invention.

## Revendications

1. Lecteur de carte à puce à insertion manuelle comprenant :
un bâti (5) dans lequel est ménagé un chemin de guidage (3) de la carte (1) ou d'un support de celle-ci,
une pièce mobile (7) portant un ensemble de plots de contact (9),
**caractérisé en ce qu'**il comprend :
un premier moyen de couplage mécanique (17) couplé à la pièce mobile (7) et disposé pour interagir avec la carte tandis que celle-ci effectue une première course pour faire effectuer à la pièce mobile un mouvement horizontal relatif par rapport à la carte et amener les plots de contact à porter sur des zones choisies (2) de la carte lors de l'insertion de celle-ci, et
un deuxième moyen de couplage mécanique (19) couplé à la pièce mobile (7) et disposé pour interagir avec la carte pour, lors d'une deuxième course de la carte, faire effectuer à la pièce mobile un mouvement horizontal solidaire avec la carte.

2. Lecteur de carte à puce selon la revendication 1, comprenant en outre un commutateur (21) dont la commutation active les plots de contact, fixé au bâti de manière à être commuté par une interaction avec la carte à la fin de la deuxième course,
le deuxième moyen de couplage étant tel que, lors du retrait de la carte, le commutateur est commuté et désactive les plots de contact pendant la deuxième course.

3. Lecteur de carte à puce selon la revendication 1, dans lequel le premier moyen de couplage mécanique (11, 13, 17) provoque un glissement avec frottement des plots de contact sur la carte avant qu'ils ne se positionnent sur les zones choisies de la carte.

4. Lecteur de carte selon la revendication 1, **caractérisé en ce qu'**il comprend un moyen de rappel (15) pour, lorsque l'utilisateur retire la carte, ramener la pièce mobile dans une position de repos située hors du chemin de guidage.

5. Lecteur de carte à puce selon la revendication 1, **caractérisé en ce que** la pièce mobile (7) est couplée au bâti (5) par deux paires de tiges (11, 13), une première paire de tiges (11) étant reliée en rotation autour d'un premier axe (A1) au bâti (5) et autour d'un deuxième axe (A2) à la pièce mobile (7), la deuxième paire de tiges (13) étant reliée en rotation autour d'un troisième axe (A3) au bâti (5) et autour d'un quatrième axe (A4) à la pièce mobile (7).

6. Lecteur de carte à puce selon la revendication 5, **caractérisé en ce que** le premier moyen de couplage mécanique est un levier (17) formé par prolongement d'une tige d'une des paires de tiges de manière à interagir avec le bord de la carte pour rapprocher les plots de contact (9) de la pièce mobile (7) des zones choisies (2) de la carte.

7. Lecteur de carte à puce selon la revendication 5, **caractérisé en ce que** le deuxième moyen de couplage mécanique (19) est une butée fixée à la pièce mobile (7) à une distance prédéterminée des plots de contact, combinée à une structure (11, 13, 9) qui permet aux plots de contact (9) de porter sur les zones choisies de la carte (2) avec une pression suffisante pour entraîner un déplacement solidaire de la carte et de la pièce mobile.

8. Procédé d'insertion d'une carte à puce (1) dans un lecteur de carte à puce comportant l'étape suivante :
a) insérer la carte dans le lecteur jusqu'à ce que celle-ci ou un support de celle-ci entre en contact avec un premier moyen de couplage mécanique (17) couplé à une pièce mobile (7) portant un ensemble de plots de contact (9) ;
**caractérisé en ce qu'**il comporte les étapes suivantes :
b) poursuivre l'insertion de la carte jusqu'à ce que celle-ci ou le support de celle-ci entre en contact avec un deuxième moyen de couplage mécanique (19), la carte ou le support de celle-ci étant en contact avec le premier moyen de couplage (17), de sorte que la pièce mobile (7) effectue un mouvement horizontal relatif par rapport à la carte ; et
c) poursuivre davantage l'insertion de la carte, la carte ou le support de celle-ci étant en contact avec le deuxième moyen de couplage (19), de sorte que le mouvement horizontal de la pièce mobile (7) est solidaire du mouvement de la carte (1) au cours de cette étape.

9. Procédé selon la revendication 8, dans lequel, au cours de l'étape b), les plots de contact (9) de la pièce mobile (7) viennent se poser sur la carte (1) et y exécutent un mouvement de glissement avec frottement.

## Claims

1. A manual insertion smart card reader including:
a frame (5) in which is made a guide path (3) of the card (1) or of a support thereof,
a mobile element (7) supporting a set of contact pads (9),
**characterized in that** it comprises:
a first mechanical coupling means (17) coupled to the mobile element (7) and arranged to interact with the card as said card performs a first travel to give the mobile element a relative horizontal motion with respect to the card and bring the contact pads to bear against selected areas (2) of the card upon insertion thereof, and
a second mechanical coupling means (19) coupled to the mobile element (7) and arranged to interact with the card for, in a second travel of the card, giving the mobile element a horizontal motion along with the card.

2. The smart card reader of claim 1, further including a switch (21), the switching of which activates the contact pads, attached to the frame to be switched by an interaction with the card at the end of the second travel,
the second coupling means being such that, upon withdrawal of the card, the switch is switched and deactivates the contact pads during the second travel.

3. The smart card reader of claim 1, wherein the first mechanical coupling means (11, 13, 17) causes a sliding with friction of the contact pads against the card before they position on the selected areas of the card.

4. The smart card reader of claim 1, **characterized in that** it includes a return means (15) for, when the user withdraws the card, bringing the mobile element back to an idle position located outside of the guide path.

5. The smart card reader of claim 1, **characterized in that** the mobile element (7) is coupled to the frame (5) by two pairs of rods (11, 13), a first pair of rods (11) being rotatably connected around a first axis (A1) to the frame (5) and around a second axis (A2) to the mobile element (7), the second pair of rods (13) being rotatably connected around a third axis (A3) to the frame (5) and around a fourth axis (A4) to the mobile element (7).

6. The smart card reader of claim 5, **characterized in that** the first mechanical coupling means is a lever (17) formed by the extension of a rod of one of the rod pairs to interact with the card edge to bring the contact pads (9) of the mobile element (7) closer to the selected areas (2) of the card.

7. The smart card reader of claim 5, **characterized in that** the second mechanical coupling means (19) is a stop attached to the mobile element (7) at a predetermined distance from the contact pads, combined to a structure (11, 13, 9) which enables the contact pads (9) to bear against the chosen areas of the card (2) with a sufficient pressure to cause a motion of the mobile element along with the card.

8. A method of insertion of a smart card (1) into a smart card reader, including the steps of:
a) inserting the card into the reader until said card or a support thereof contacts a first mechanical coupling means (17) coupled with a mobile element (7) supporting a set of contact pads (9);
**characterized in that** it comprises the following steps:
b) pursuing the card insertion until said card or the support thereof contacts a second mechanical coupling means (19), the card or its support being in contact with the first coupling means (17), so that the mobile element (7) performs a relative horizontal motion with respect to the card; and
c) further pursuing the card insertion, the card or the support thereof being in contact with the second coupling means (19), so that the horizontal motion of the mobile element (7) is performed along with the motion of the card (1) in this step.

9. The method of claim 8, in which, during step b), the contact pads (9) of the mobile element (7) come to bear against the card (1) and slide with friction against it.

## Patentansprüche

1. Lesegerät für Chipkarten ("intelligente Karte","smart card"), mit manueller Einführung, welches umfaßt:
ein Gehäusegestell (5), in welchem eine Vorschubweg-Führung (3) der Karte (1) oder eines Kartenträgers vorgesehen ist,
ein bewegliches Teil (7), das eine Gruppe von Kontaktkissen (9) trägt,
**dadurch gekennzeichnet, daß** das Lesegerät umfaßt:
eine mit dem beweglichen Teil (7) gekuppelte erste mechanische Kupplungsvorrichtung (17) in solcher Anordnung, daß sie mit der Karte, während diese eine erste Bahnbewegung ausführt, so zusammenwirkt, daß das bewegliche Teil zu einer Horizontalbewegung relativ bezüglich der Karte veranlaßt wird und die Kontaktkissen zur Anlage gegen ausgewählte Bereiche (2) der Karte bei deren Einführung gelangen, sowie
eine mit dem beweglichen Teil gekuppelte zweite mechanische Kupplungsvorrichtung (19) in solcher Anordnung, daß sie mit der Karte bei einer zweiten Bahnbewegung der Karte so zusammenwirkt, daß das bewegliche Teil zu einer gemeinsamen Horizontalbewegung mit der Karte veranlaßt wird.

2. Chipkarten-Lesegrät nach Anspruch 1, welches des weiteren einen Schalter (21) umfaßt, dessen Umschaltung die Kontaktkissen aktiviert, wobei der Schalter am Gehäusegestell so befestigt ist, daß er durch Zusammenwirken mit der Karte zu Ende der zweiten Bahnbewegung umgeschaltet wird,
wobei die zweite Kupplungsvorrichtung so ausgebildet ist, daß beim Entnehmen der Karte der Schalter umgeschaltet wird und die Kontaktkissen während der zweiten Bahnbewegung deaktiviert.

3. Chipkarten-Lesegerät nach Anspruch 1, bei welchem die erste mechanische Kupplungsvorrichtung (11, 13, 17) eine Gleitreibungsbewegung der Kontaktkissen auf der Karte bewirkt, bevor die Kontaktkissen ihre Stellung auf den ausgewählten Bereichen der Karte einnehmen.

4. Chipkarten-Lesegerät nach Anspruch 1, **dadurch gekennzeichnet, daß** es eine Rückholvorrichtung (15) aufweist, um bei der Entnahme der Karte durch den Benutzer das bewegliche Teil in eine außerhalb der Vorschubwegführung liegende Ruhestellung zurückzustellen.

5. Chipkarten-Lesegerät nach Anspruch 1, **dadurch gekennzeichnet, daß** das bewegliche Teil (7) mit dem Gehäuse-Gestell (5) durch zwei Gestängepaare (11, 13) gekuppelt ist, von welchen ein erstes Stangenpaar (11) um eine erste Achse (A1) drehbar mit dem Gehäusegestell (5) und um eine zweite Achse (A2) drehbar mit dem beweglichen Teil (7) verbunden ist und von welchen das zweite Stangenpaar (13) um eine dritte Achse (A3) drehbar mit dem Gehäusegestell (5) und um eine vierte Achse (A4) drehbar mit dem beweglichen Teil verbunden ist.

6. Chipkarten-Lesegerät nach Anspruch 5, **dadurch gekennzeichnet, daß** die erste mechanische Kupplungsvorrichtung ein Hebel (17) ist, der durch Verlängerung einer Stange eines. der Gestängepaare derart gebildet wird, daß er mit dem Rand der Karte unter Annäherung der Kontaktkissen (9) des beweglichen Teils (7) an die ausgewählten Bereiche (2) der Karte zusammenwirkt.

7. Chipkarten-Lesegerät nach Anspruch 5, **dadurch gekennzeichnet, daß** die zweite mechanische Kupplungsvorrichtung (19) ein an dem beweglichen Teil (7) in vorgegebenem Abstand von den Kontaktkissen befestigter Anschlag ist, in Kombination mit einem Gebilde (11, 13, 9), das gewährleistet, daß die Kontaktkissen (9) auf den ausgewählten Bereichen der Karte (2) mit ausreichendem Anpreßdruck zur Anlage kommen können, um eine gemeinsame Verschiebung der Karte und des beweglichen Teils zu bewirken.

8. Verfahren zum Einführen einer Chipkarte(1) in ein Chipkarten-Lesegerät, wobei das Verfahren die folgen Stufen bzw. Schritte umfasst:
(a) Einführen der Karte in das Lesegerät, bis die Karte oder ein Kartenträger in Berührung mit einer ersten mechanischen Kupplungsvorrichtung (17) gelangt, die mit einem eine Gruppe von Kontaktkissen (9) tragenden beweglichen Teil (7) gekuppelt ist;
**dadurch gekennzeichnet, daß** das Verfahren die folgenden Stufen bzw. Schritte umfaßt:
b) Fortsetzen der Einführung der Karte, bis diese oder ein Kartenträger in Berührung mit einer zweiten mechanischen Kupplungsvorrichtung (19) gelangt, wobei die Karte oder ihr Träger in Berührung mit der ersten Kupplungsvorrichtung (17) stehen, derart daß das bewegliche Teil (7) eine Horizontalbewegung relativ bezüglich der Karte ausführt; sowie
c) weitere Fortsetzung der Einführung der Karte,wobei die Karte oder ihr Träger in Berührung mit der zweiten Kupplungsvorrichtung (19) steht, derart daß die Horizontalbewegung des beweglichen Teils (7) gemeinsam verbunden mit der Bewegung der Karte (1) während dieser Verfahrensstufe erfolgt.

9. Verfahren nach Anspruch 8, bei welchem während der Verfahrensstufe b) die Kontaktkissen (9) des beweglichen Teils (7) zur Anlage auf der Karte (1) gelangen und dort eine Gleitreibungsbewegung ausführen.
